# EUROPÄISCHE PATENTANMELDUNG

(11) **EP 2 692 667 A1**
(43) Veröffentlichungstag der Anmeldung: **05.02.2014**
(21) Anmeldenummer: 13177799.7
(22) Anmeldetag: 24.07.2013
(51) Int. Cl.: B65G 1/04, B65G 1/08

(54) **Regalbediengerät für ein Regallager, Regallager mit einem derartigen Regalbediengerät und Verfahren zum vereinzelten Entnehmen von Ware aus einem derartigen Regallager**

(30) Priorität: 01.08.2012 DE 102012213592; 30.08.2012 DE 102012215364
(71) Anmelder: Dürkopp Fördertechnik GmbH, 33703 Bielefeld (DE)
(72) Erfinder: Wend, Michael, 33619 Bielefeld (DE); Sieksmeier, Dirk, 32139 Spenge (DE); Völker, Sigurd, 32602 Vlotho (DE)
(74) Vertreter: Rau, Schneck & Hübner

(57) **Zusammenfassung**

Regalbediengerät und Regallager, wobei das Regallager mindestens eine Lagerstange (2) zum Lagern von Ware und eine Verriegelungseinheit (4, 30) zum Verriegeln der Ware an der mindestens einen Lagerstange (2) aufweist. Das Regalbediengerät umfasst eine verlagerbare Belade-/Entnahmestange (14) mit einem Beladeantrieb zum Beladen des Regallagers mit Ware (20) und mit einer Vereinzelungseinheit (16, 25) für ein vereinzeltes Entnehmen der Ware aus dem Regallager.

## Beschreibung

Die Erfindung betrifft ein Regalbediengerät für ein Regallager, ein Regallager mit einem derartigen Regalbediengerät und ein Verfahren zum vereinzelten Entnehmen von Ware aus einem derartigen Regallager.

Ein Regalbediengerät ist aus der DE 198 50 163 A1 bekannt. Um ein vereinzeltes Entnehmen von Waren aus einem Regallager zu ermöglichen, ist an den Lagerstangen des Regallagers jeweils ein steuerbares Stopperelement vorgesehen. Die Stopperelemente sind jeweils über eine Steuereinrichtung steuerbar, sodass auszulagernde Waren mittels des Stopperelements an den Führungsstangen freigegeben werden können. Der apparative und insbesondere steuerungstechnische Aufwand für ein derartiges Lager und insbesondere das damit zusammenwirkende Regalbediengerät ist groß. Das Ein- bzw. Auslagern von vereinzelten Waren ist aufwändig.

Aus der DE 20 201 008 717 U1 ist ein Greifersystem zum Entnehmen einzelner Waren aus einem Regallager bekannt. Die DE 195 00 612 A1 betrifft einen codierbaren Adapter zur Verwendung mit einer Hängeförderanlage. Die DE 298 04 038 U1 betrifft einen Vereinzeler für auf Förderstrecken hängende Bügel.

Aus der DE 10 2007 013 863 A1, aus der DE 102 14 471 A1 und aus der DE 10 2008 025 778 A1 ist jeweils ein Regallager in Form eines Hochregallagers bekannt mit einem Regalbediengerät, das zum Beladen des Hochregallagers einerseits und zum Entnehmen von Ware aus dem Hochregallager andererseits dient. Dazu werden Waren, insbesondere auf Kleiderbügeln angeordnete Kleidungsstücke, auf einer Lagerstange des Hochregals angeordnet und die komplette, mit Waren bestückte Lagerstange durch das Regalbediengerät entnommen und abtransportiert. Die genannten Regallager ermöglichen eine Entnahme von Waren ausschließlich in großen Mengen. Nicht benötigte, ausgelagerte Waren müssen sortiert und anschließend entweder im Hochregallager oder an einer Stelle gelagert werden. In jedem Fall ist ein zusätzliches Lagern der nicht benötigten, aber dennoch ausgelagerten Waren erforderlich. Das Entnehmen von Ware aus einem derartigen Hochregallager ist umständlich.

Es ist eine Aufgabe der vorliegenden Erfindung, ein Regalbediengerät für ein Regallager derart zu gestalten, dass das Entnehmen von Ware aus dem Regallager vereinfacht und insbesondere das vereinzelte Entnehmen von Ware aus dem Regallager ermöglicht ist.

Diese Aufgabe ist erfindungsgemäß gelöst durch ein Regalbediengerät mit den im Anspruch 1 angegebenen Merkmalen.

Erfindungsgemäß wurde erkannt, dass ein Regalbediengerät eine Vereinzelungseinheit für ein vereinzeltes Entnehmen von Ware aus einem Regallager, insbesondere einem Hochregallager, aufweist. Die Vereinzelungseinheit ist insbesondere eine aktive, insbesondere mittels eines Antriebs antreibbare, Komponente. Die aktive Vereinzelungseinheit kann insbesondere mit einer passiv ausgeführten Komponente, insbesondere einer Verriegelungseinheit, die insbesondere an einer Lagerstange eines Hochregallagers angeordnet ist, zum vereinzelten Entnehmen von Ware aus dem Regallager zusammenwirken. Das bedeutet, dass zum vereinzelten Entnehmen der Ware, insbesondere genau, eine Vereinzelungseinheit erforderlich ist. Insbesondere ist es nicht erforderlich, dass an jeder Lagerstange eine aktive Vereinzelungseinheit vorgesehen ist. Der apparative Aufwand für das Regalbediengerät und das Regallager ist dadurch reduziert. Insbesondere wird das Zusammenwirken zwischen der aktiven Vereinzelungseinheit des Regalbediengeräts mit der Verriegelungseinheit an einer Lagerstange durch eine Entriegelungseinheit ermöglicht, die insbesondere an einer Belade-/Entnahmestange des Regalbediengeräts vorgesehen ist. Dadurch ist es möglich, dass mit dem Regalbediengerät einzelne Waren, insbesondere Kleidungsstücke, vereinzelt und gezielt aus dem Regallager entnommen werden können. Insbesondere ist es denkbar, dass in einem Entnahmevorgang einzelne Waren verschiedener Lagerstangen des Regallagers entnommen und auf einer Belade-/Entnahmestange des Regalbediengeräts aufgenommen werden. Zum Beladen des Regallagers weist die Belade-/Entnahmestange einen Beladeantrieb auf. Insbesondere kann damit Ware auf eine Lagerstange des Regallagers aufgeschoben werden. Das Regalbediengerät umfasst ein Grundgerät. Das Regalbediengerät kann mit dem Grundgerät insbesondere auf dem Boden angeordnet und entlang des Bodens verlagerbar ausgeführt sein. Es ist alternativ auch möglich, dass das Grundgerät beispielsweise an einem oberhalb des Regallagers angeordneten Führungssystem hängend angeordnet verlagerbar ist. Das Grundgerät kann einen Wagen mit einem Wagenantrieb zum Bewegen des Wagens auf dem Boden aufweisen. Insbesondere ermöglicht der Wagen ein Bewegen in der Ebene. Weiterhin kann das Grundgerät einen Hubantrieb umfassen. Der Hubantrieb ermöglicht ein Verlagern der Belade-/Entnahmestange in einer Richtung quer zum Boden. Insbesondere ist der Hubantrieb längs einer Vertikalsäule geführt. Die Vertikalsäule ist insbesondere fest mit dem Wagen und insbesondere senkrecht zu einer von dem Wagen gebildeten Wagenebene orientiert. Das Regelbediengerät ist zum vereinzelten Entnehmen von Ware aus einem Regallager verschiedener Typen geeignet. Das Regalbediengerät ermöglicht ein vereinzeltes Entnehmen von Ware beispielsweise aus einem Hochregallager, aus einem einetagigen Regallager sowie aus einem Wanderregallager, bei welchem die Lagerstangen verlagerbar sind.

Ein Regalbediengerät mit einer Steuerungseinheit nach Anspruch 2 ermöglicht ein automatisiertes und insbesondere vollautomatisches Entnehmen von Ware aus dem Regallager. Insbesondere ist es möglich, eine vorkommissionierte Warenauswahl, also eine bestimmte Kombination einzelner Waren, die insbesondere auf verschiedenen Lagerstangen des Regallagers angeordnet sind, zusammenzustellen und mittels des Regalbediengeräts aus dem Regallager zu entnehmen. Die Steuerungseinheit kann auch ein Beladen des Regallagers ermöglichen.

Ein Regalbediengerät nach Anspruch 3 ermöglicht eine Überwachung des Entnahmevorgangs. Insbesondere kann dadurch ausgeschlossen werden, dass Waren in einer nicht gewünschten Menge, also in zu großer oder zu geringer Stückzahl, entnommen werden. Die Erkennungseinheit kann zum Identifizieren der entnommenen Ware ausgebildet sein. Insbesondere ist die Erkennungseinheit ein Transponderleser. Hierzu kann die Erkennungseinheit als Barcodelaser ausgestaltet sein. Auch eine Farbcodierung zur Identifikation der Ware kann genutzt werden, die von der Erkennungseinheit optisch erfasst werden kann.

Ein Regalbediengerät nach Anspruch 4 ermöglicht eine direkte und unkomplizierte Erkennung der entnommenen Ware. Durch die Verwendung eines Transponderlesers als Erkennungseinheit kann Zusatzinformation bei der Entnahme von einem Transponder ausgelesen werden. Beispielsweise ist es denkbar, dass der Transponder Informationen wie beispielsweise die Art der Ware, eine Artikelnummer, ein Einlagerungsdatum, Größe, Farbe und Designer eines Kleidungsstücks trägt. Ein Taster oder eine Lichtschranke ermöglichen eine besonders kostengünstige Erkennung des Entnahmevorgangs.

Ein Regalbediengerät mit einer Vereinzelungseinheit nach Anspruch 5 ermöglicht ein direktes Eingreifen in den Entnahmevorgang. Die Vereinzelungseinheit ermöglicht ein mechanisch gestütztes Entnehmen der gewünschten Ware.

Ein Regalbediengerät nach Anspruch 6 vereinfacht die Handhabung der Ware. Insbesondere ist eine Handhabung mit dem Regalbediengerät und dem Regallager unabhängig von der Ware selbst möglich. Dadurch ist es möglich, voneinander verschiedene Waren vereinzelt in einfacher Weise zu handhaben. Die Verwendung eines Adapters ermöglicht eine definierte Schnittstelle für das Regalbediengerät und das Regallager hinsichtlich der Lagerung und Handhabung der Waren.

Es ist eine weitere Aufgabe der vorliegenden Erfindung, ein Regallager derart zu schaffen, dass das Entnehmen von Ware vereinfacht und insbesondere das vereinzelte Entnehmen von Ware ermöglicht ist.

Diese Aufgabe ist erfindungsgemäß gelöst durch ein Regallager mit den im Anspruch 7 angegebenen Merkmalen.

Erfindungsgemäß wurde erkannt, dass ein Regallager mindestens eine Lagerstange zum Lagern von Ware aufweist, wobei ein Regalbediengerät mit der Belade-/Entnahmestange benachbart zu der mindestens einen Lagerstange unter Bildung einer gemeinsamen Transferstrecke anordenbar ist. Die Belade-/Entnahmestange und die Lagerstange sind entlang deren Stangenlängsachsen hintereinander angeordnet. Es ist möglich, dass die Stangenlängsachsen, die jeweils insbesondere linear ausgeführt sind, im Bereich des Übergangs zwischen der Lagerstange und der Belade-/Entnahmestange einen leichten Knick, also eine geringfügige Abweichung von einen geraden Verlauf der Stange im Bereich des Übergangs, aufweisen. Ein derartiger Knick weist einen Winkel von mindestens 170°, insbesondere mindestens 175° und insbesondere mindestens 177° auf. Die gemeinsame Transferstrecke dient zum Beladen des Regallagers mit Ware und zum Entnehmen von Ware aus dem Regallager.

Ein Regallager nach Anspruch 8 ermöglicht ein sicheres Lagern der Ware an der mindestens einen Lagerstange. Insbesondere für den Fall, dass die Lagerstange gegenüber einer Horizontalen geneigt ist, um ein automatisches, schwerkraftbedingtes Fördern von Ware entlang der Stangenlängsachse zu ermöglichen, dient eine Verriegelungseinheit zum sicheren Verriegeln der Ware an der Lagerstange. Ein unbeabsichtigtes Entnehmen der Ware ist ausgeschlossen.

Bei einem Regallager nach Anspruch 9 ist an der Belade-/Entnahmestange des Regalbediengeräts eine Entriegelungseinheit vorgesehen. Die Entriegelungseinheit korrespondiert mit der Verriegelungseinheit der mindestens einen Lagerstange. Die Entriegelungseinheit dient zum Entriegeln der Verriegelungseinheit. Die Entriegelungseinheit ermöglicht insbesondere ein automatisches Entriegeln der Verriegelungseinheit, wenn die Belade-/Entnahmestange in einer Transferanordnung angeordnet ist, also sich benachbart zu der mindestens einen Lagerstange unter Bildung der gemeinsamen Transferstrecke befindet.

Ein Regallager gemäß Anspruch 10 ermöglicht ein schnelles und direktes Einlagern und Auslagern von Ware mittels des Regalbediengeräts. Eine Einlagerstrecke und eine Auslagerstrecke sind insbesondere derart angeordnet, dass sie mit der Belade-/Entnahmestange des Regalbediengeräts in eine Transferanordnung bringbar sind. Dadurch ist es möglich, Ware schnell und unkompliziert auf die Belade-/Entnahmestange zu verlagern und von der Belade-/Entnahmestange wieder zu entnehmen.

Ein Regallager nach Anspruch 11 ermöglicht eine effektive Nutzung des Regallagers mit einem einzigen Regalbediengerät. Die Lagerkapazität ist hoch. Es ist möglich, viel Ware mit einer hohen Dichte, d. h. mit geringem Platzbedarf, in dem Regallager einzulagern. Die Lagerhaltungskosten sind reduziert. Ein derartiges Lager mit hoher Lagerkapazität ist beispielsweise ein Hochregallager. In einem Hochregallager sind mehrere Lagerstangen horizontal beabstandet zueinander angeordnet. Diese Lagerstangen bilden eine Lageretage. In einem Hochregallager sind mehrere und insbesondere mindestens drei Lageretagen über einander, d. h. vertikal beabstandet zueinander, angeordnet. In einem Hochregallager sind die Lagerstangen ortsfest angeordnet. Es ist möglich, dass die Lagerstangen eines Hochregallagers mit Stirnseiten beabstandet und einander zugewandt angeordnet sind. Die Lagerstangen eines derartigen Hochregallagers bilden eine Lagergasse, in der das Regalbediengerät angeordnet ist. Ebenfalls eine hohe Lagerkapazität weist ein Wanderregallager auf. In einem Wanderregallager sind mehrere Lagerstangen in einer Lagerstangenebene angeordnet. Ein Wanderregallager kann mehrere Lagerstangenebenen umfassen. Ein Wanderregallager ermöglicht eine Verlagerung der Lagerstangen entlang einer Wanderregalverlagerungsbahn. Die Lagerstangen sind verlagerbar und insbesondere nicht ortsfest.

Es ist eine weitere Aufgabe der vorliegenden Erfindung, ein Verfahren zum vereinzelten Entnehmen von Ware aus einem Regallager bereitzustellen.

Diese Aufgabe ist erfindungsgemäß gelöst durch ein Verfahren mit den im Anspruch 12 angegebenen Merkmalen.

Erfindungsgemäß wurde erkannt, dass durch das Bereitstellen eines Regallagers gemäß der vorliegenden Erfindung und entsprechenden Regalbediengerät Ware vereinzelt aus dem Regallager entnehmbar ist. Die Vorteile des Verfahrens entsprechen im Wesentlichen den Vorteilen des Regalbediengeräts und des Regallagers, worauf hiermit verwiesen wird.

Ausführungsbeispiele der Erfindung werden nachfolgend anhand der Zeichnung näher erläutert. In dieser zeigen:
- Fig. 1: eine perspektivische Darstellung eines Hochregallagers mit einem Regalbediengerät gemäß einer ersten Ausführungsform;
- Fig. 2: eine perspektivische, vergrößerte Darstellung des Regalbediengeräts gemäß Fig. 1 mit daran angeordneten Waren;
- Fig. 3: eine perspektivische, vergrößerte Darstellung eines vereinzelten Entnehmens von Ware mit dem Regalbediengerät gemäß Fig. 1 mit einer Verriegelungseinheit in einer Verriegelungsposition;
- Fig. 4: eine Fig. 3 entsprechende Darstellung mit der Verriegelungseinheit in einer Entriegelungsposition;
- Fig. 5: eine Fig. 4 entsprechende Darstellung mit einer Vereinzelungseinheit in einer Eingriffsposition;
- Fig. 6: eine Fig. 5 entsprechende Darstellung mit der Verriegelungseinheit in der Verriegelungsposition und der Vereinzelungseinheit in einer Nicht-Eingriffsposition;
- Fig.7: eine perspektivische Darstellung einer Anordnung von drei Wanderregallagern mit jeweils einem Regalbediengerät gemäß einer weiteren Ausführungsform der Erfindung und
- Fig. 8: eine perspektivische, vergrößerte Darstellung des Regalbediengeräts gemäß Fig. 7 mit daran angeordneten Waren.

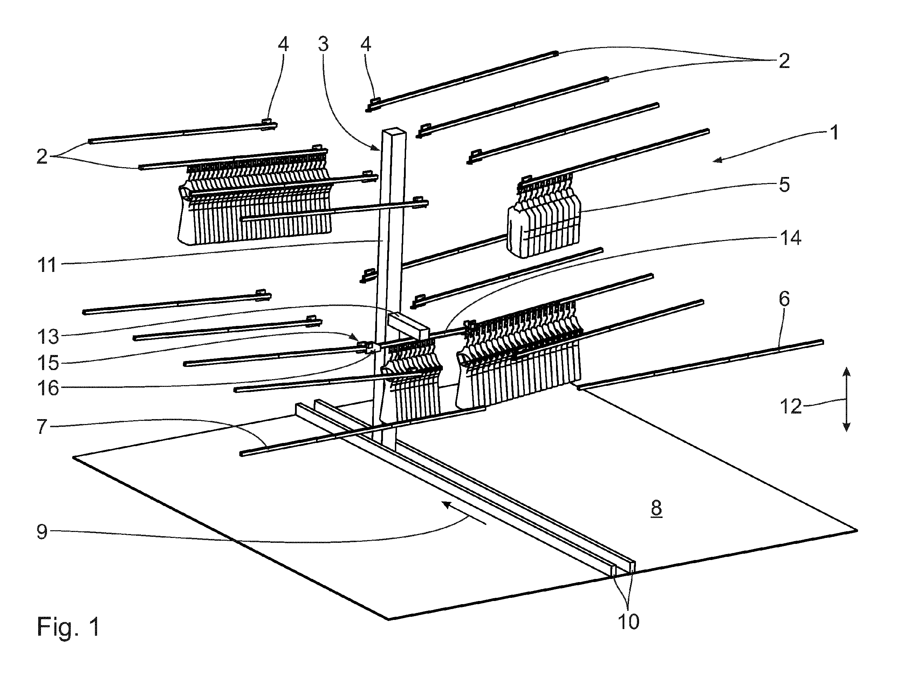

Ein in Fig. 1 als Ganzes mit 1 bezeichnetes Hochregallager umfasst mehrere Lagerstangen 2. Die Lagerstangen 2 sind jeweils in Vierergruppen in zwei Etagen beidseitig symmetrisch zu einem Regalbediengerät 3 angeordnet. Das bedeutet, dass das Regalbediengerät 3 zwischen jeweils zwei gegenüberliegend angeordneten Lagerstangen 2 des Hochregallagers 1 angeordnet ist. Die Lagerstangen 2 sind jeweils gegenüber einer Horizontalebene geneigt, wobei die Neigung zu dem Regalbediengerät 3 hin gerichtet ist. Die Neigung beträgt beispielsweise 10°. An einem dem Regalbediengerät 3 zugewandten Ende weist jede Lagerstange 2 eine Verriegelungseinheit 4 auf. Auf den Lagerstangen 2 kann Ware 5, insbesondere in Form von auf Kleiderbügeln angeordneten Bekleidung gelagert werden. Aufgrund der Neigung der Lagerstange 2 kann Ware 5 selbsttätig zu einem dem Regalbediengerät 3 zugewandten Ende im Bereich der Verriegelungseinheit 4 rutschen oder gleiten. In dieser Position benachbart zu der Verriegelungseinheit 4 kann die Ware 5 von dem Regalbediengerät 3 entnommen werden. Die Verlagerung der Ware 5 an der Lagerstange 2 zu der Verriegelungseinheit 4 kann zusätzlich oder alternativ zu der Neigung durch einen Antrieb erfolgen. Insbesondere ist es vorgesehen, dass auf einer Lagerstange 2 ausschließlich identische Ware angeordnet ist. Unterschiedliche Waren werden vorzugsweise auf verschiedenen Lagerstangen 2 gelagert. Insgesamt weist das Hochregallager 1 in Fig. 1 16 Lagerstangen 2 auf.

Das Hochregallager 1 umfasst weiterhin eine Einlagerstrecke 6 und eine Auslagerstrecke 7. Über die Einlagerstrecke 6 kann Ware 5 auf das Regalbediengerät 3 zum Einlagern auf Lagerstangen 2 im Hochregallager 1 verlagert werden. Dazu kann die Einlagerstrecke 6 einen nicht dargestellten Einlagerantrieb aufweisen. Zusätzlich oder alternativ ist es auch denkbar, dass die Einlagerstrecke 6 gegenüber der Horizontalen zu dem Regalbediengerät 3 hin geneigt ist. Gemäß dem gezeigten Ausführungsbeispiel in Fig. 1 ist die Einlagerstrecke 6 horizontal, also ohne Neigung, angeordnet.

Die Auslagerstrecke 7 kann zum Auslagern der Ware 5 einen nicht dargestellten Auslagerantrieb aufweisen, um die Ware 5 von dem Regalbediengerät 3 weg entlang der Auslagerstrecke 7 nach links zu verlagern. Zusätzlich oder alternativ kann die Auslagerstrecke 7 gegenüber der Horizontalen geneigt sein, um einen selbsttätigen Transport der Ware 5 von dem Regalbediengerät 3 weg zu ermöglichen. Gemäß dem gezeigten Ausführungsbeispiel in Fig. 1 ist die Auslagerstrecke 7 horizontal, also nicht geneigt, angeordnet.

Bei nicht dargestellten Ausführungen des Hubregallagers 1 können auch mehrere Einlagerstrecken 6 und/oder mehrere Auslagerstrecken 7 vorhanden sein.

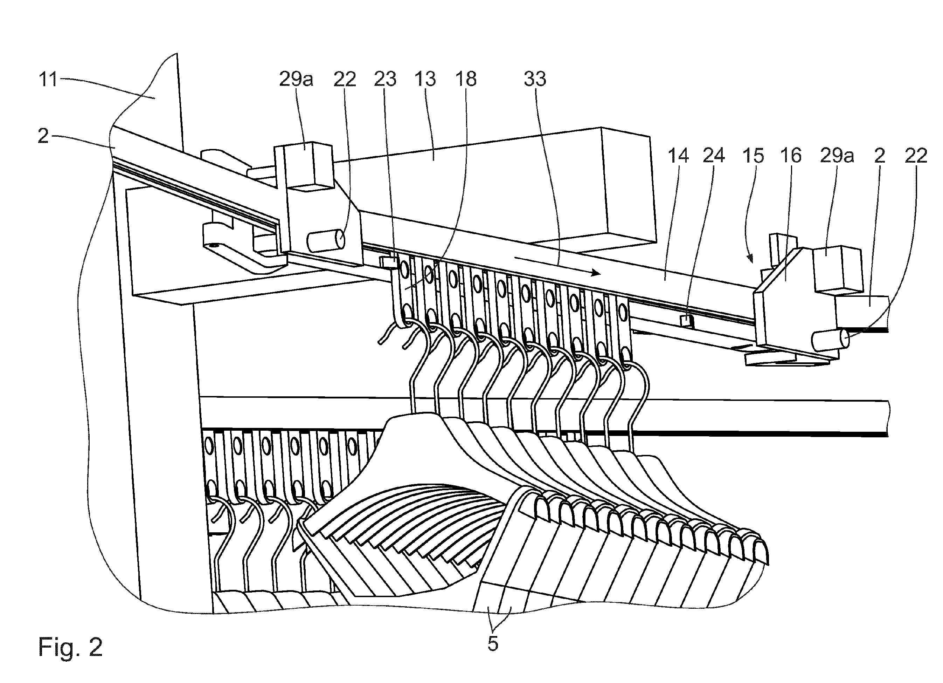

Im Folgenden wird das Regalbediengerät 3 anhand der Fig. 2 bis 6 näher erläutert. Das Regalbediengerät 3 umfasst ein Grundgerät mit einem nicht im Einzelnen dargestellten Wagen, der einen nicht dargestellten Wagenantrieb aufweist. Mittels des Wagens kann das Regalbediengerät 3 auf einem Boden 8 verlagert werden. Gemäß dem gezeigten Ausführungsbeispiel ist der Wagen ein nicht dargestellter Schlitten, der eine lineare Führungsbewegung des Regalbediengeräts 3 entlang einer Führungsrichtung 9 ermöglicht. Der Schlitten ist auf Führungsschienen 10 entlang der Führungsrichtung 9 geführt verlagerbar. Es ist auch denkbar, dass die Führungsschienen 10 nicht linear verlaufen und insbesondere eine zumindest abschnittsweise gekrümmte Führungsrichtung 9 darstellen. Die Führungsschienen 10 sind fest auf oder in dem Boden 8 verankert. Es ist möglich, dass die Verankerung lösbar ist, so dass mittels der Führungsschienen 10 die Führungsrichtung 9 veränderbar festgelegt werden kann.

An dem nicht dargestellten Schlitten ist eine Vertikalsäule 11 befestigt, die sich zusammen mit dem Schlitten entlang der Führungsrichtung 9 bewegt. An der Vertikalsäule 11 ist ein nicht näher dargestellter Hubantrieb vorgesehen, der eine Hubbewegung entlang einer Vertikalrichtung 12 ermöglicht. Der Hubantrieb ermöglicht ein Anheben und Absenken entlang der Vertikalrichtung 12. Mit dem Hubantrieb ist ein horizontal angeordneter Trägerarm 13 verbunden, der eine Belade-/Entnahmestange 14 trägt. Die Belade-/Entnahmestange 14 ist mit ihrer Stangenlängsachse horizontal orientiert. Die Belade-/Entnahmestange 14 ist in einem mittigen Bereich an dem Trägerarm 13 befestigt und senkrecht zu dem Trägerarm 13 orientiert. Bei einer nicht dargestellten Variante des Regalbediengeräts 3 kann auch mehr als eine Belade-/Entnahmestange 14 vorhanden sein.

Die Belade-/Entnahmestange 14 weist zwei freie Enden 15 auf, die paarweise mit einander gegenüberliegenden Lagerstangen 2 in einer Transferanordnung der Belade-/Entnahmestange 14 derart anordenbar sind, dass die Belade-/Entnahmestange 14 und die benachbart dazu angeordneten Lagerstangen 2 eine gemeinsame Transferstrecke zum Beladen des Hochregallagers 1 mit Ware 5 und zum Entnehmen von Ware 5 aus dem Hochregallager 1 angeordnet sind. Gemäß der Darstellung in Fig. 1 ist die Belade-/Entnahmestange 14 mit einem Paar gegenüberliegender Lagerstangen 2 in der Transferanordnung, die in der unteren Etage als zweites Paar benachbart zu der Einlagerstrecke 6 und der Auslagerstrecke 7 entlang der Führungsrichtung 9 angeordnet sind. Das bedeutet, dass die gemeinsame Transferstrecke durch eine relative Verlagerung der Belade-/Entnahmestange 14 und mindestens einer Lagerstange 2 erfolgt. Die relative Verlagerung erfolgt durch eine aktive Verlagerung des Regalbediengeräts 3 auf dem Boden 8, insbesondere entlang der Führungsrichtung 9, und der Belade-/Entnahmestange 14 entlang der Vertikalrichtung 12. Die Lagerstange 2 bleibt ortsfest.

An den freien Enden 15 der Belade-/Entnahmestange 14 ist jeweils eine Vereinzelungseinheit 16 vorgesehen. Die Vereinzelungseinheit 16 dient zum vereinzelten Entnehmen der Ware 5 aus dem Hochregallager 1. Die Vereinzelungseinheit 16 wirkt mit der Verriegelungseinheit 4 der Lagerstangen 2 zum vereinzelten Entnehmen der Ware 5 zusammen.

Die Belade-/Entnahmestange 14 ist im Wesentlichen als nach unten geöffnetes, U-förmiges Profilrohr ausgeführt. An der unten angeordneten Öffnung des U sind Hinterschnitt-Stege vorgesehen, die ein Abrollen oder Gleiten von Roll-/Gleitkörpern 17 eines Adapters 18 entlang der Stangenlängsachse der Belade-/Entnahmestange 14 ermöglichen. Die Adapter 18 sind an den Lagerstangen 2, der Belade-/Entnahmestange 14, der Einlagerstrecke 6 und der Auslagerstrecke 7 jeweils geführt verlagerbar. Jeder Adapter 18 weist zudem eine Aufnahmeöffnung 19 auf, in die die einzelne Ware 5 mittels eines Kleiderbügels 20 eingehängt und damit an dem Adapter 18 befestigt ist. Der Adapter 18 ermöglicht eine unkomplizierte Handhabung der Ware 5 bzw. der die Ware 5 tragenden Kleiderbügel 20. Insbesondere eine Veränderung der Bügelform führt nicht zwangsläufig zu einer Beeinträchtigung dessen Handhabung. Der Adapter 18 weist zudem einen Transponderchip 21 auf. Der Transponderchip 21 trägt Informationen bezüglich der an dem Adapter 18 gelagerten Ware 5. Beispielsweise sind auf dem Transponderchip 21 die Art der Ware, insbesondere die Art des Kleidungsstücks, des Herstellers, die Farbe des Kleidungsstücks, die Größe, das Material und andere Eigenschaften gespeichert. Der Transponderchip 21 ist insbesondere überschreibbar, so dass der Transponderchip 21 mehrfach verwendbar ist.

Gemäß dem gezeigten Ausführungsbeispiel weist das Regalbediengerät 3 eine Erkennungseinheit zum automatischen Erkennen der entnommenen Ware 5 auf. Die Erkennungseinheit ist als Transponderleser 22 ausgeführt. Der Transponderleser 22 ist an dem freien Ende 15 der Belade-/Entnahmestange 14 derart angeordnet, dass, wenn sich die Belade-/Entnahmestange 14 und die Lagerstange 2 in der Transferanordnung befinden, der Transponderleser 22 ein Auslesen eines Transponderchips 21 des Adapters 18 ermöglicht, der der Belade-/Entnahmestange 14 zugewandt ist. Anstelle des Transponderchips 21 und des Transponderlasers 22 kann ein Erkennen der entnommenen Ware 5 auch in anderer Form geschehen, beispielsweise über ein Identifikationsmittel in Form eines Barcodelasers oder über eine optische Erfassung einer Farbcodierung der Ware 5.

An dem Regalbediengerät 3 sind ein erster Beladeantrieb 23 und ein zweiter Beladeantrieb 24 vorgesehen. Die Beladeantriebe 23, 24 weisen jeweils ein Stellelement auf, das mit den Adaptern 18 in Eingriff bringbar ist. Die Stellelemente sind entlang der Stangenlängsachse der Belade-/Entnahmestange 14 verlagerbar und mittels eines nicht dargestellten Antriebs antreibbar. Mittels der Beladeantriebe 23, 24 kann die an den Adaptern 18 gelagerte Ware 5 auf eine der Lagerstangen 2 geschoben und somit das Hochregallager 1 beladen werden. Dazu ist es erforderlich, dass die Belade-/Entnahmestange 14 in der Transferanordnung, also benachbart zu einer entsprechenden Lagerstange 2, angeordnet ist. Gemäß der in Fig. 2 gezeigten Anordnung dient der erste Beladeantrieb 23 zum Beladen der rechts dargestellten Lagerstange 2, wobei der zweite Beladeantrieb 24 zum Beladen der links dargestellten Lagerstange 2 dient.

Die beiden Beladeantriebe 23, 24 sind insbesondere fest miteinander gekoppelt, beispielsweise über einen Riemen- oder Kettenantrieb. Wenn der erste Beladeantrieb 23 gemäß Fig. 2 nach rechts entlang einer ersten Beladerichtung 33 verlagert wird, wird gleichzeitig der zweite Beladeantrieb 24 entlang der gleichen Richtung verlagert. Wenn der zweite Beladeantrieb 24 ein freies Ende 15 der Belade-/Entnahmestange 14 erreicht, wird er an einer Umlenkrolle an eine der Vertikalsäule 11 zugewandten Rückseite der Belade-/Entnahmestange 14 geführt.

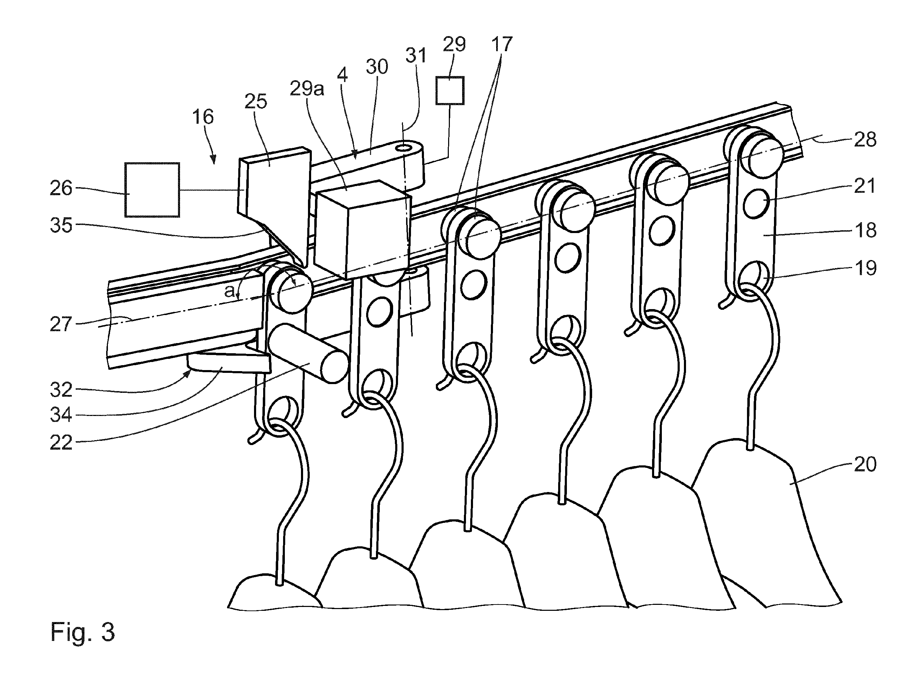

Die Vereinzelungseinheit 16 umfasst ein entlang der Vertikalrichtung 12 verlagerbares Vereinzelungselement 25, das mittels eines pneumatischen Aktors 26, der in Fig. 3 schematisch dargestellt ist, vertikal verlagerbar ist.

Die Belade-/Entnahmestange 14 weist eine Stangenlängsachse 27 auf. Die Lagerstange 2 weist eine Stangenlängsachse 28 auf. In der in Fig. 3 dargestellten Transferanordnung der Belade-/Entnahmestange 14 schneiden sich die Längsachsen 27, 28 im Bereich der Vereinzelungseinheit 16. Ein Schnittwinkel a zwischen den Längsachsen 27, 28, also eine Abweichung der Belade-/Entnahmestange 14 von einem vollständig geraden Verlauf, beträgt gemäß dem gezeigten Ausführungsbeispiel etwa 175°. Im Bereich der Vereinzelungseinheit 16 ist die Belade-/Entnahmestange 14 also um einen kleinen Winkel abgeknickt, der im dargestellten Beispiel 5° beträgt, aber auch beispielsweise im Bereich von 3° liegen kann. Der Schnittwinkel a ist insbesondere derart ausgelegt, dass eine Verlagerung der Ware 5 von der Belade-/Entnahmestange 14 auf eine Lagerstange oder von einer Lagerstange 2 auf die Belade-/Entnahmestange 14 nicht beeinträchtigt ist.

Im Folgenden wird die Verriegelungseinheit 4 der Lagerstange 2 näher erläutert. Die Verriegelungseinheit 4 weist ein betätigbares, insbesondere mittels eines in Fig. 3 schematisch dargestellten pneumatischen Aktors 29 betätigbares, Klauenelement 30 auf. Das Klauenelement 30 ist entlang der Längsachse 28 seitlich versetzt zu der Lagerstange 2 angeordnet. Mittels des Aktors 29 ist das Klauenelement 30 um eine vertikale Schwenkachse 31 gegenüber der Lagerstange 2 schwenkbar. In der in Fig. 3 gezeigten Verriegelungsanordnung des Verriegelungselements 4 ist das Klauenelement 30 derart angeordnet, dass eine einstückig an dem Klauenelement 30 angeformte Klaue 32 einen Adapter 18 derart hintergreift, dass eine Verlagerung des Adapters 18 entlang der Längsachse 28 zum Entnehmen der Ware 5 aus der Lagerstange 2 blockiert ist. Es ist denkbar, dass die Betätigung des Klauenelements 30, das auch als Sperrklinke bezeichnet wird, federbelastet erfolgt. Das bedeutet, dass sobald eine von dem Aktor 29 auf das Klauenelement 30 ausgeübte Betätigungskraft ausbleibt, das Klauenelement 30 selbsttätig in die Verriegelungsanordnung gemäß Fig. 3 zurückverlagert wird. Dies kann beispielsweise dadurch erfolgen, dass eine nicht dargestellte Torsionsfeder entlang der Schwenkachse 31 angeordnet ist. Der Aktor zur Betätigung des Klauenelements 30 kann auch auf der der Belade-/Entnahmestange 14 gegenüberliegenden Seite angeordnet und an der Vereinzelungseinheit 16 montiert sein, wie dies in der Zeichnung bei 29a angedeutet ist.

Im Folgenden wird ein Verfahren zum Be- und Entladen des Hochregallagers 1 im Einzelnen erläutert.

In einem ersten Schritt wird Ware 5 an Adaptern 18 über die Einlagerstrecke 6 des Hochregallagers 1 bereitgestellt. Anschließend wird das Regalbediengerät 3 in eine Transferanordnung bezüglich der Einlagerstrecke 6 angeordnet. Dazu wird der Wagen und die darauf angeordnete Vertikalsäule 11 entlang der Führungsrichtung 9 zu der Einlagerstrecke 6 hin verlagert. Zusätzlich wird mittels des Hubantriebs die Belade-/Entnahmestange 14 auf ein Vertikalniveau mit der Einlagerstrecke 6 gebracht. Sobald die Belade-/Entnahmestange 14 sich in Transferanordnung zu der Einlagerstrecke 6 befindet, wird die Ware 5 von der Einlagerstrecke 6 auf die Belade-/Entnahmestange 14 verlagert.

Das Regalbediengerät 3 steht mit einer nicht dargestellten, insbesondere zentral angeordneten, Steuerungseinheit des Hochregallagers 1 in Signalverbindung. Über die Steuerungseinheit wird eine Zielposition für die einzulagernde Ware 5 an das Regalbediengerät 3 übermittelt. Daraufhin wird eine Zielposition, also eine Lagerstange 2, auf die die Ware 5 einzulagern ist, von dem Regalbediengerät 3 selbsttätig angefahren, indem der Wagen entlang der Führungsrichtung 9 und die Belade-/Entnahmestange 14 mittels des Hubantriebs über den Trägerarm 13 entlang der Vertikalrichtung 12 in die entsprechende Zielposition verfahren werden. Der Bewegungsablauf, also die Verlagerung entlang der Führungsrichtung 9 und entlang der Vertikalrichtung 12, kann sequentiell, also nacheinander, oder synchron, also gleichzeitig, erfolgen.

Sobald die Belade-/Entnahmestange 14 in der Transferanordnung gemäß Fig. 2 angeordnet ist, werden die an der Belade-/Entnahmestange 14 gehaltenen Adapter 18 mit den daran befestigten Waren 5 mittels des ersten Beladeantriebs 23 auf die in Fig. 2 rechts dargestellte Lagerstange 2 entlang der ersten Beladerichtung 33 aufgeschoben. Die erste Beladerichtung 33 ist parallel zur Stangenlängsachse 14 orientiert.

Um ein Beladen der Lagerstange 2 zu ermöglichen, also um ein Aufschieben der Adapter 18 von der Belade-/Entnahmestange 14 auf die Lagerstange 2 zu ermöglichen, ist es erforderlich, dass die Adapter 18 an der Klaue 32 des Klauenelements 30 vorbei auf die Lagerstange 2 verschoben werden. Dazu weist die Klaue 32 eine Einführschräge 34 auf. Die Einführschräge 34 ermöglicht durch ein Aufschieben eines Adapters 18 entlang der ersten Beladerichtung 33, dass die Klaue 32 quer zur Beladerichtung 33 weggedrückt wird, so dass das Klauenelement 30 um die Schwenkachse 31 aufgeschwenkt wird. Sobald der Adapter 18 an dem Klauenelement 30 entlang der Beladerichtung 33 verlagert worden ist, schwenkt das Klauenelement 30 aufgrund der federbelasteten Lagerung automatisch in die Verriegelungsposition zurück.

Zusätzlich oder alternativ ist es denkbar, dass das Klauenelement 30 mittels des Aktors 29 aktiv entriegelt und um die Schwenkachse 31 von der Lagerstande 2 weggeschwenkt wird, um ein Beladen der Lagerstange 2 zu vereinfachen.

Der Beladevorgang ist insbesondere dann abgeschlossen, wenn der erste Beladeantrieb 23 eine definierte Endposition an der Belade-/Entnahmestange 14 einnimmt, die insbesondere mittels eines nicht dargestellten Endschalters erfasst und der Steuerungseinheit zugeführt wird. Das Regalbediengerät 3 ermöglicht ein schnelles, direktes und unkompliziertes Beladen mehrerer, insbesondere identischer Waren 5 auf eine Lagerstange 2.

Für ein Entnehmen von Ware 5 der Lagerstangen 2 des Hochregallagers 1 wird die Belade-/Entnahmestange 14 des Regalbediengeräts 3 über die Steuerungseinheit angesteuert und in eine gewünschte Zielposition zur Entnahme eine Zielware 5 verlagert. Um eine gewünschte Zielposition der Belade-/Entnahmestange 14 zu ermitteln, ist in der Steuerungseinheit ein aktueller Lagerbestand hinterlegt. Insbesondere ist in der Steuerungseinheit gespeichert, welche Art von Ware 5 an welcher Position, d. h. auf welcher Lagerstange 2, in dem Hochregallager 1 bevorratet ist.

Bevor eine konkret zu entnehmende Ware 5 aus dem Hochregallager 1 entnommen wird, wird mittels des Transponderlasers 22 die Information des Transponderchips 21 an dem Adapter 18 der zu entnehmenden Ware 5 gelesen. Für den Fall, dass eine abweichende Information festgestellt wird, kann eine Fehlentnahme verhindert werden. Diese Transponderfunktion kann bei einer einfacheren Ausführung des Regalbediengeräts 3 auch entfallen.

Eine derartige Anordnung ist in Fig. 3 gezeigt. Mit der Anordnung in der in Fig. 3 gezeigten Transferanordnung der Belade-/Entnahmestange 14 wirkt die Vereinzelungseinheit 16, die an dem Regalbediengerät 3 angeordnet ist, mit der Verriegelungseinheit 4, die an der jeweiligen Lagerstange 2 angeordnet ist, derart zusammen, dass ein Entriegeln und Öffnen der Verriegelungseinheit 4 möglich ist. Dazu sind die Vereinzelungseinheit 16 und die Verriegelungseinheit 4 mit der Steuerungseinheit in Signalverbindung. Insbesondere ist es denkbar, dass die Vereinzelungseinheit 16 einen nicht dargestellten Endschalter betätigt, der ein Entriegelungssignal über die Steuerungseinheit an die Verriegelungseinheit 4 überträgt. Das Entriegelungssignal bewirkt ein Entriegeln der Verriegelungseinheit 4.

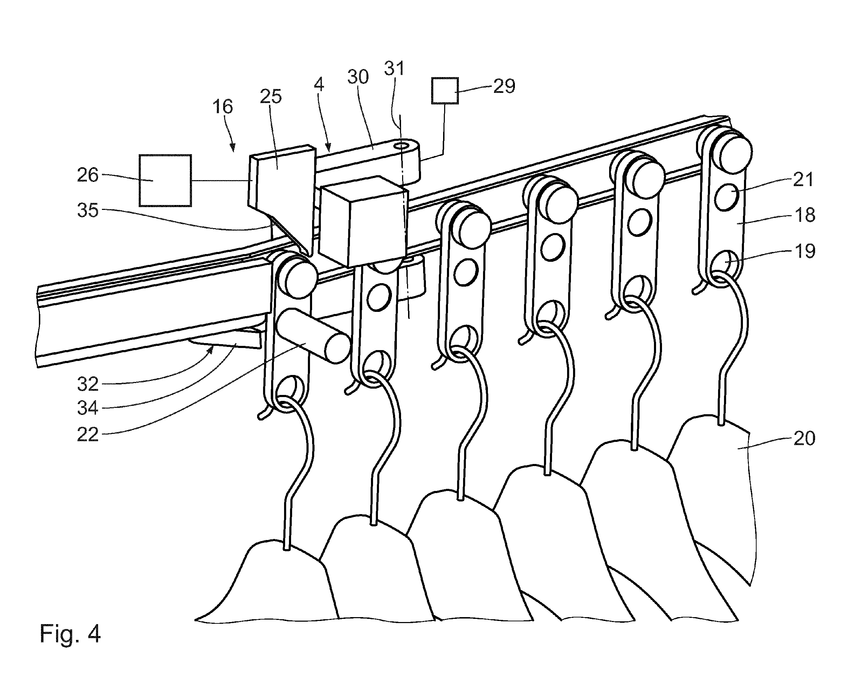

Ausgehend von der Anordnung in Fig. 3 wird die Verriegelungseinheit 4 durch eine Entriegelungseinheit in der Form des Aktors 29 entriegelt und geöffnet, indem das Klauenelement 30 um die Schwenkachse 31 von der Lagerstange 2 weggeschwenkt wird. Die geöffnete, entriegelte Anordnung des Verriegelungselements 4 ist in Fig. 4 dargestellt. In dieser Anordnung ist der der Belade-/Entnahmestange 14 zugewandte Adapter 18 nicht gehalten. Aufgrund der geneigten Anordnung der Lagerstange 2 rollt bzw. gleitet der Adapter 18 selbsttätig von der Lagerstange 2 auf die Belade-/Entnahmestange 14. Es ist beispielsweise denkbar, dass in Folge einer Selbsthemmung oder dann, wenn eine Mehrzahl von bereits entnommenen Waren 5 an der Belade-/Entnahmestange 14 angeordnet ist, ein selbsttätiges Verlagern der Ware 5 von der Lagerstange 2 auf die Belade-/Entnahmestange 14 behindert ist. Zur Überwindung einer derartigen Behinderung kann die Lagerstange 2 einen Antrieb aufweisen.

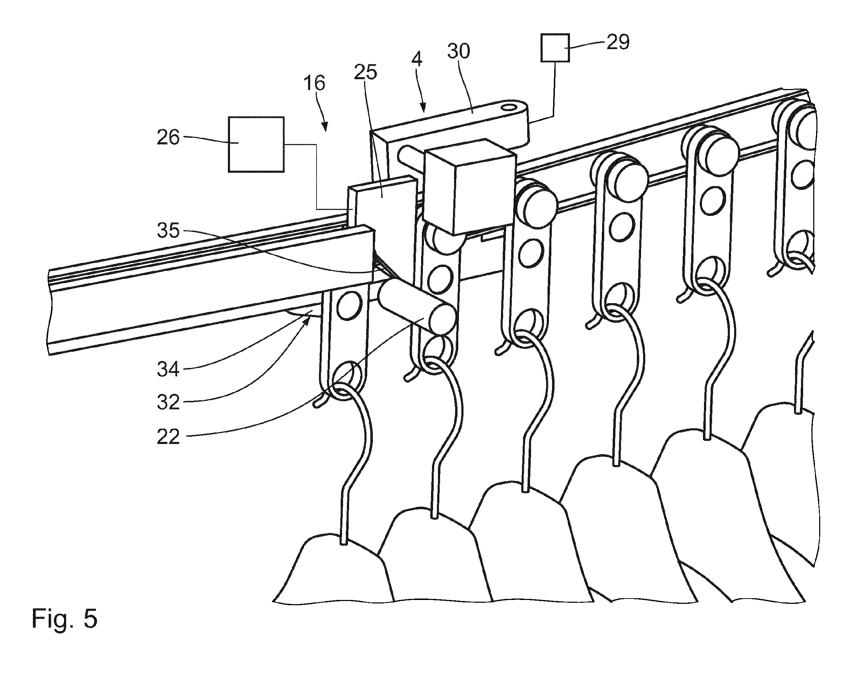

Um zu verhindern, dass unbeabsichtigt mehrere Adapter 18 von der Lagerstange 2 auf die Belade-/Entnahmestange 14 verlagert werden, dass also ein unbeabsichtigtes Entnehmen mehrerer Waren 5 erfolgt, wird das Vereinzelungselement 25 entlang der Vertikalrichtung 12 nach unten verlagert, um ein Entnehmen des in Fig. 3 zweiten von links angeordneten Adapters 18 zu verhindern. Das Vereinzelungselement 25 weist eine dem zu entnehmenden Adapter 18 zugewandte Vereinzelungsschräge 35 auf. Die Vereinzelungsschräge 35 ist insbesondere derart ausgeführt, dass beim Stoppen des zweiten Adapters 18 gleichzeitig der erste Adapter 18 mit einer Querkraft beaufschlagt wird, um eine Verlagerung entlang der Stangenlängsachse 27 zu unterstützen. Durch das Absenken des Vereinzelungselements 25 kommt es mit dem Adapter 18 im Bereich der Vereinzelungsschräge 35 in Kontakt. Dadurch wird der Adapter 18 von der Lagerstange 2 auf die Belade-/Entnahmestange 14 geschoben. Das Öffnen der Verriegelungseinheit 4, das in Fig. 4 dargestellt ist, und das Absenken des Vereinzelungselements 25, das in Fig. 5 dargestellt ist, erfolgt typischerweise synchronisiert und im Wesentlichen gleichzeitig. Die Darstellung der Verfahrensschritte des Öffnens der Verriegelungseinheit und des Absenkens des Vereinzelungselements 25 in den Fig. 4 und 5 dient im Wesentlichen dem besseren Verständnis. Die Antriebe für das Vereinzelungselement 25 und das Klauenelement 30 können, insbesondere über Feder-Vorspannungen, mechanisch miteinander gekoppelt sein. Ein Zusammenspiel des Vereinzelungselements 25 und des Klauenelements 30 bei der Förderung vereinzelter Adapter 18 kann nach Art einer Kugelschreibermechanik geschehen. Ein maximaler Zeitversatz zwischen dem Öffnen der Verriegelungseinheit 4 und dem Betätigen der Vereinzelungseinheit 16 ist gering.

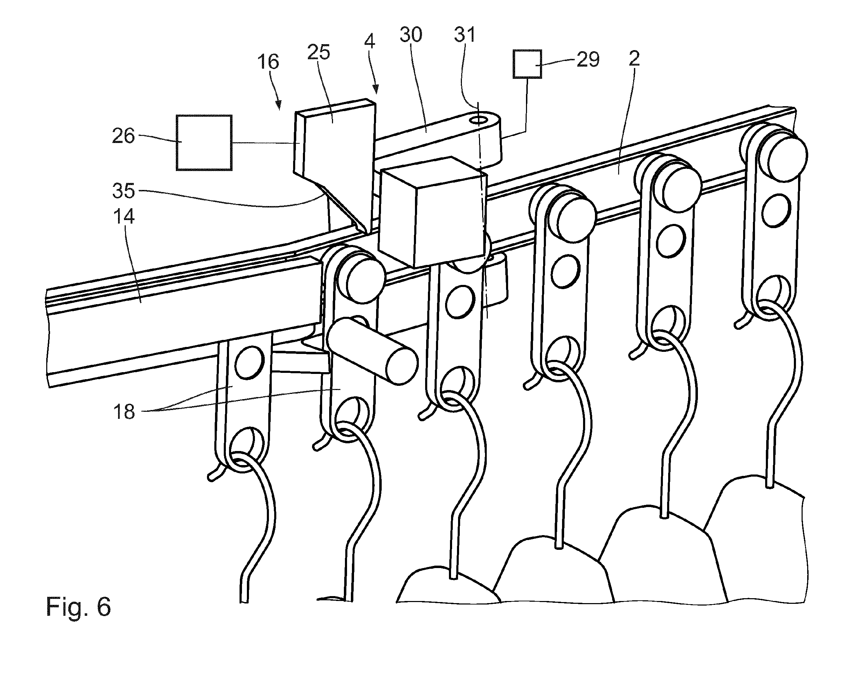

Sobald der erste, der Belade-/Entnahmestange 14 zugewandte Adapter 18 mit der daran befestigten Ware 5 entnommen ist, also von der Lagerstange 2 auf die Belade-/Entnahmestange 14 verlagert ist, werden die Verriegelungseinheit 4 und die Vereinzelungseinheit 16 in die jeweilige Ausgangsposition zurückverlagert. Diese Anordnung ist in Fig. 6 dargestellt. In Fig. 6 ist ein links dargestellter Adapter 18 links von dem Klauenelement 30 angeordnet und an der Belade-/Entnahmestange 14 gehalten. Dieser Adapter 18 ist von der Lagerstange 2 vereinzelt entnommen. Die Vereinzelungseinheit befindet sich in einer oberen Nicht-Eingriffsanordnung. Ausgehend von dieser Anordnung kann die vereinzelte Entnahme einer Ware 5 der gezeigten Lagerstange 2 wiederholt werden. Dabei wird der oben beschriebene Ablauf ausgehend von der Anordnung in Fig. 3 wiederholt. Sofern eine zusätzliche andere Ware 5 entnommen werden soll, die an einer anderen Lagerstange 2 gelagert ist, erfolgt zunächst ein Anfahren einer Zielposition mit dem Regalbediengerät 3, bevor anschließend das vereinzelte Entnehmen an dieser anderen Lagerstange wiederholt wird. Die Ware 5 wird dann über die Auslagerstrecke 7 ausgelagert.

In einem weiteren, nicht dargestellten Ausführungsbeispiel ist das Regallager als ein einetagiges Regallager ausgeführt. Insbesondere ist das einetagige Regallager im Wesentlichen identisch zu dem Hochregallager 1, wobei die Lagerstangen lediglich in einer Etage zueinander angeordnet sind. Diese Lagerstangen bilden eine Lagerstangenetage. Es ist insbesondere nicht erforderlich, dass das Regalbediengerät in diesem Fall einen Hubantrieb aufweist. Das Regalbediengerät ist vereinfacht. Die Lagerkapazität in einer Lagerstangenetage des Hochregallagers ist identisch zu der des einetagigen Regallagers.

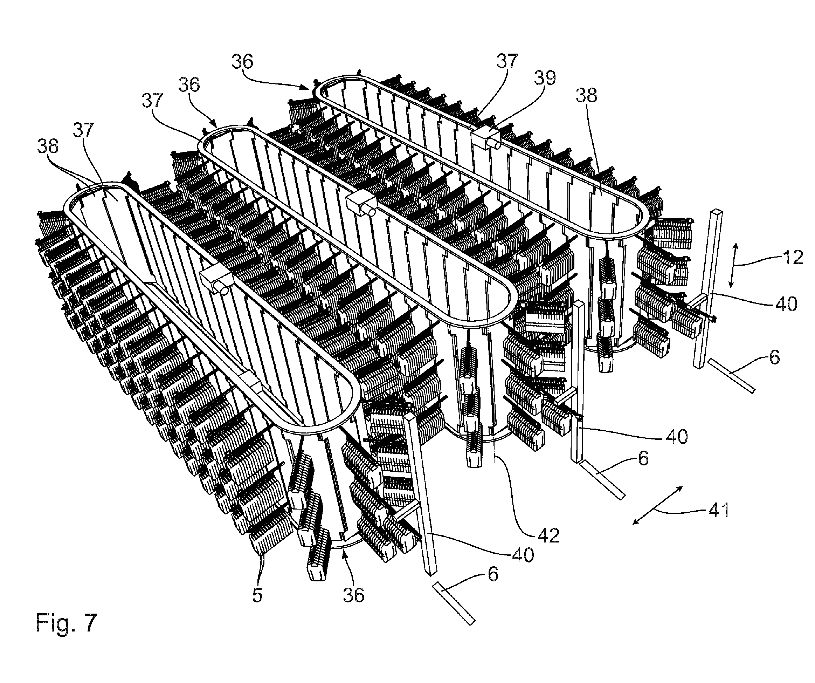

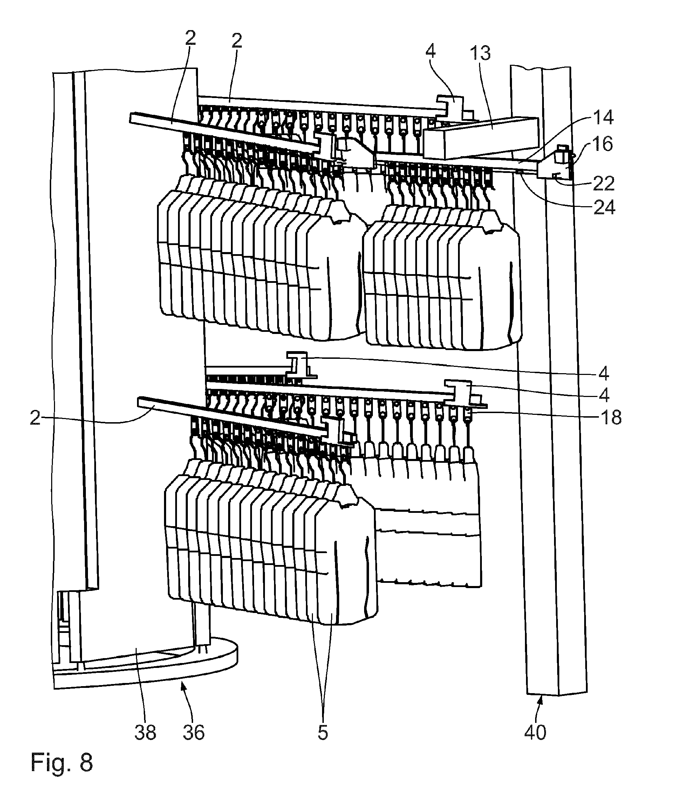

Fig. 7 und 8 zeigen eine weitere Ausführungsform eines Regallagers 36. Komponenten, die denjenigen entsprechen, die vorstehend unter Bezugnahme auf Fig. 1 bis 6 bereits erläutert wurden, tragen die gleichen Bezugsziffern und werden nicht nochmals im Einzelnen diskutiert.

Das Regallager 36 ist in Form eines Wanderregallagers ausgeführt. Ein derartiges Lager wird auch als Karusselllager bezeichnet. Das bedeutet, dass die Lagerstangen 2, die bei den in Fig. 7 dargestellten drei Wanderregallagern 36 in drei Lagerstangenebenen vertikal beabstandet zueinander angeordnet sind, entlang einer Wanderregalverlagerungsbahn 37 verlagerbar sind. Die Wanderregalverlagerungsbahn 37 ist eine geschlossene Bahn und ermöglicht eine umlaufende Verlagerung der Lagerstangen 2 an dem Wanderregallager. Die Wanderregalverlagerungsbahn 37 ermöglicht eine endlose Verlagerung der Lagerstangen 2. Die Wanderregalverlagerungsbahn 37 gemäß dem gezeigten Ausführungsbeispiel umfasst zwei parallel orientierte Längsabschnitte und jeweils zwei halbkreisförmige, die beiden Längsabschnitte miteinander verbindende Bogenabschnitte. Gemäß dem gezeigten Ausführungsbeispiel ist die Wanderregalverlagerungsbahn 37 länglich ausgeführt, d. h. die jeweilige Länge der Längsabschnitte ist größer als ein senkrechter Abstand der Längsabschnitte zueinander. Insbesondere ist die Länge der Längsabschnitte doppelt so groß und insbesondere dreimal so groß wie der senkrechte Abstand. Es ist auch denkbar, dass die Wanderregalverlagerungsbahn eine andere Kontur aufweist und insbesondere im Wesentlichen kreisförmig, rechteckig oder in einer anderen Form ausgeführt ist.

Das Wanderregallager 36 umfasst mehrere, entlang der Wanderregalverlagerungsbahn 37 verlagerbare Wanderregaleinzelelemente 38. Die Wanderregaleinzelelemente 38 sind jeweils bezüglich einer vertikalen Achse 42 schwenkbar miteinander verbunden. Dadurch ist es möglich, dass die Wanderregaleinzelelemente 38 entlang der gekrümmten Bogenabschnitte der Wanderregalverlagerungsbahn 37 verlagerbar sind. Die Wanderregaleinzelelemente 38 sind eben ausgeführt. Ausgehend von den Wanderregaleinzelelementen 38 erstrecken sich die Lagerstangen 2 in radialer Richtung bezogen auf die Wanderregalverlagerungsbahn 37 nach außen. Die Wanderregaleinzelelemente 38 sind zwischen einer oberen und einer unteren Schiene geführt verlagerbar. Für die Verlagerung der Wanderregaleinzelelemente 38 weist jedes Wanderregallager 36 einen Wanderregalantrieb 39 auf.

Jeweils in einem Kopfbereich des Wanderregallagers 36 ist ein ortsfestes Regalbediengerät 40 vorgesehen. Das Regalbediengerät 40 ist im Wesentlichen analog zu dem Regalbediengerät 3 gemäß der ersten Ausführungsform ausgeführt. Dadurch, dass das Regalbediengerät 40 ortsfest auf dem Boden 8 angeordnet ist, kann ein Antrieb an dem Grundgerät entfallen.

Das Regalbediengerät 40 ist derart bezüglich eines korrespondierenden Wanderregallagers 36 angeordnet, dass die Belade-/Entnahmestange 14 parallel zu den Längsabschnitten der Wanderregalverlagerungsbahn 37 angeordnet ist. Die Belade-/Entnahmestange 14 des Regalbediengeräts 40 und eine Lagerstange 2 des Wanderregallagers 36 bilden dann eine gemeinsame Transferstrecke, wenn die Lagerstange 2 in einer äußeren Position entlang der Wanderregalverlagerungsbahn 37 angeordnet ist. Eine derartige Anordnung ist in Fig. 7 und 8 dargestellt. Diese Anordnung ist insbesondere dadurch gekennzeichnet, dass die Lagerstange 2 mittig zwischen den beiden Längsabschnitten im Bereich des Bogenabschnitts der Wanderregalverlagerungsbahn 37 angeordnet ist. Das bedeutet, dass die gemeinsame Transferstrecke dadurch gebildet wird, dass eine Lagerstange 2 entlang der Wanderregalverlagerungsbahn 37 in der genannten Weise und gleichzeitig die Belade-/Entnahmestange 14 in einer zu der jeweiligen Lagerstange 2 korrespondierenden Vertikalposition angeordnet ist. Das bedeutet, dass zur Erlangung der gemeinsamen Transferstrecke eine erforderliche Relativbewegung zwischen Lagerstange 2 und Belade-/Entnahmestange 14 durch eine Verlagerung der Lagerstange 2 entlang der Wanderregalverlagerungsbahn 37 und/oder der Belade-/Entnahmestange 14 entlang der Vertikalrichtung 12 erfolgt.

Zum Einlagern von Ware 5 in Form von Kleidungsstücken in das Wanderregallager 36 ist jeweils eine Einlagerstrecke 6 vorgesehen. Es ist auch möglich, dass für mehrere Wanderregallager 36 nur eine Einlagerstrecke 6 vorgesehen ist, die entlang einer Querrichtung 41 verlagerbar ist, um die einzelnen Regalbediengeräte 40 zu erreichen.

Die Einlagerstrecken 6 sind jeweils auf einem Höheniveau der untersten Lagerstangenetage angeordnet. Die Einlagerstrecke 6 kann beispielsweise entlang einer geführten Bewegung, insbesondere mittels am oder im Boden verankerten Schienen entlang der Querrichtung 41 verlagert werden.

Die Einlagerstrecke 6 dient gleichzeitig als Auslagerstrecke. Das bedeutet, dass Ware, die mittels des Regalbediengeräts vereinzelt aus dem Wanderregallager 36 entnommen worden ist, über die Belade-/Entnahmestange 14 zum Entladen auf die Auslagerstrecke, die der Einlagerstrecke 6 entspricht, übergeben wird. Über die Auslagerstrecke erfolgt abschließend ein Auslagern der so zusammengestellten Ware.

Die Funktionalität und insbesondere ein Verfahren zum vereinzelten Entnehmen von Ware aus dem Wanderregallager 36 ist im Wesentlichen identisch mit dem Verfahren zum Entnehmen der Ware aus einem Hochregallager gemäß der ersten Ausführungsform, worauf hiermit verwiesen wird. Wesentlicher Unterschied ist, dass für ein Anordnen des Regalbediengeräts 40 an der Lagerstange 2 unter Bildung einer gemeinsamen Transportstrecke eine kombinierte Verlagerung erfolgt. Einerseits wird eine Lagerstange 2, von der Ware 5 zu entnehmen ist, in eine Zielposition derart verfahren, dass die Lagerstange 2 dem Regalbediengerät 40 zugewandt und benachbart angeordnet ist. Das bedeutet also, dass das Wanderregaleinzelelement 38, an dem die Ziel-Lagerstange 2 angeordnet ist, dem Regalbediengerät 40 zugewandt ist. Für das vereinzelte Entnehmen der Zielware erfolgt eine Höhenverstellung der Belade-/Entnahmestange 14, um die Transportstrecke mit der Lagerstange 2 aus der gewünschten Lagerstangenetage zu bilden.

Sobald eine gewünschte Auswahl an Ware 5 auf der Belade-/Entnahmestange 14 angeordnet ist, kann diese kommissionierte Ware über die Einlagerstrecke 6 ausgelagert werden. Dazu wird die Belade-/Entnahmestange 14 in eine untere Vertikalposition gebracht, sodass die Belade-/Entnahmestange 14 mit der Einlagerstrecke 6 eine gemeinsame Transportstrecke bildet.

Es ist auch möglich, dass ein Wanderregallager genau eine Lagerstangenetage aufweist. In diesem Fall kann eine Höhenverstellung des Regalbediengeräts 40 entfallen. Die Ausführung des Regalbediengeräts ist dann vereinfacht.

## Patentansprüche

1. Regalbediengerät für ein Regallager, wobei das Regalbediengerät (3) umfasst:
a) ein Grundgerät,
b) mindestens eine an dem Grundgerät befestigte Belade-/Entnahmestange (14),
c) mindestens einen an der Belade-/Entnahmestange (14) angeordneten Beladeantrieb (23, 24) zum Beladen des Regallagers (1) mit Ware (5), und
d) eine Vereinzelungseinheit (16) für ein vereinzeltes Entnehmen der Ware (5) aus dem Regallager (1).

2. Regalbediengerät gemäß Anspruch 1, **gekennzeichnet durch** eine Steuerungseinheit zum automatisch gesteuerten Entnehmen der Ware (5) aus dem Regallager (1).

3. Regalbediengerät gemäß einem der vorstehenden Ansprüche, **gekennzeichnet durch** eine Erkennungseinheit (22) zum Erkennen der entnommenen Ware (5).

4. Regalbediengerät gemäß Anspruch 3, **dadurch gekennzeichnet, dass** die Erkennungseinheit ein Transponderleser (22), ein Taster oder eine Lichtschranke ist.

5. Regalbediengerät gemäß einem der vorstehenden Ansprüche, **dadurch gekennzeichnet, dass** die Vereinzelungseinheit (16) einen Aktor (26), insbesondere einen pneumatischen Aktor, aufweist.

6. Regalbediengerät gemäß einem der vorstehenden Ansprüche, **dadurch gekennzeichnet, dass** die Ware (5) mittels eines Adapters (18) einzeln an der Belade-/Entnahmestange (14) gehalten ist.

7. Regallager umfassend
a) mindestens eine Lagerstange (2) zum Lagern von Ware (5) und
b) ein Regalbediengerät (3) gemäß einem der vorstehenden Ansprüche,
wobei die Belade-/Entnahmestange (14) benachbart zu der mindestens einen Lagerstange (2) unter Bildung einer gemeinsamen Transferstrecke zum Beladen des Regallagers (1) mit Ware (5) und zum vereinzelten Entnehmen von Ware (5) aus dem Regallager (1) anordenbar ist.

8. Regallager gemäß Anspruch 7, **gekennzeichnet durch** eine an der mindestens einen Lagerstange (2) angeordnete Verriegelungseinheit (4) zum Verriegeln der Ware (5) an der mindestens einen Lagerstange (2).

9. Regallager gemäß Anspruch 8, **gekennzeichnet durch** eine an der Belade-/Entnahmestange (14) angeordnete Entriegelungseinheit (29) zum Entriegeln der Verriegelungseinheit (4).

10. Regallager gemäß einem der Ansprüche 7 bis 9, **gekennzeichnet durch** mindestens eine Einlagerstrecke (6) und **durch** mindestens eine Auslagerstrecke (7).

11. Regallager gemäß einem der Ansprüche 7 bis 10, **gekennzeichnet durch** mehrere Lagerstangen (2), die insbesondere horizontal beabstandet zueinander, insbesondere vertikal beabstandet zueinander und insbesondere an gegenüberliegenden freien Enden (15) der Belade-/Entnahmestange (14) angeordnet sind.

12. Verfahren zum vereinzelten Entnehmen von Ware aus einem Regallager umfassend die Verfahrensschritte
- Bereitstellen eines Regallagers (1) gemäß einem der Ansprüche 7 bis 11,
- Anordnen des Regalbediengeräts (3) an der mindestens einen Lagerstange (2) unter Bildung einer gemeinsamen Transportstrecke,
- vereinzeltes Entnehmen von Ware (5) aus dem Regallager (1) durch vereinzelten Transport der Ware (5) von der mindestens einen Lagerstange (2) auf die Belade-/Entnahmestange (14).

13. Verfahren gemäß Anspruch 12, **gekennzeichnet durch** ein Beladen des Regallagers (1) mittels des Regalbediengeräts (3).

14. Verfahren gemäß Anspruch 12 oder 13, **gekennzeichnet durch** ein Entriegeln einer Verriegelungseinheit (4) zum Entnehmen der Ware (5).

15. Verfahren Anspruch 14, **gekennzeichnet durch** ein Vereinzeln der an der Lagerstange (2) gelagerten Ware (5) im entriegelten Zustand der Verriegelungseinheit (4).
